# EUROPÄISCHE PATENTSCHRIFT

(11) **EP 2 612 057 B1**
(45) Veröffentlichungstag und Bekanntmachung des Hinweises auf die Patenterteilung: **08.01.2020**
(21) Anmeldenummer: 11732452.5
(22) Anmeldetag: 14.07.2011
(51) Int. Cl.: F16H 48/11, F16H 48/36

(54) **PLANETENGETRIEBE ZUR ÜBERTRAGUNG EINES ANTRIEBSDREHMOMENTES IN EINEM FAHRZEUG SOWIE ANTRIEBSEINHEIT MIT DEM PLANETENGETRIEBE**
PLANETARY GEAR FOR TRANSMITTING A DRIVING TORQUE IN A VEHICLE AND DRIVE UNIT COMPRISING THE PLANETARY GEAR
ENGRENAGE PLANÉTAIRE POUR TRANSMETTRE UN COUPLE D'ENTRAÎNEMENT DANS UN VÉHICULE ET UNITÉ D'ENTRAÎNEMENT COMPRENANT CET ENGRENAGE PLANÉTAIRE

(30) Priorität: 03.09.2010 DE 102010036243
(43) Veröffentlichungstag der Anmeldung: 10.07.2013
(73) Patentinhaber: Schaeffler Technologies AG & Co. KG, 91074 Herzogenaurach (DE)
(72) Erfinder: SMETANA, Tomas, 91074 Herzogenaurach (DE); WURZBERGER, Philip, 90429 Nürnberg (DE)
(86) Internationale Anmeldenummer: PCT/EP2011/062072
(87) Internationale Veröffentlichungsnummer: WO 2012/028373

(56) Entgegenhaltungen:
- DE-A1-102008 061 946
- JP-A- 2002 235 832
- JP-A- 2009 150 498
- US-A- 5 458 547
- US-A- 5 624 346

## Beschreibung

### Gebiet der Erfindung

Die Erfindung betrifft eine Baugruppe mit einem Planetengetriebe zur Übertragung eines Antriebsdrehmoments in einem Fahrzeug mit einem ersten Sonnenradaufsatz und einem zweiten Sonnenradaufsatz, wobei jeder der Sonnenradaufsätze mit einer Welle drehfest gekoppelt ist und die Sonnenradaufsätze relativ zueinander drehbar sind. Die Erfindung betrifft auch eine Antriebseinheit ausgebildet als die Baugruppe.

Planetengetriebe werden oftmals in Differentialen zur Übertragung von Antriebsdrehmomenten in Fahrzeugen eingesetzt. Hierbei kann das Planetengetriebe in vielfachen Ausführungsformen zum einen in Verteilungsdifferentialen oder auch in Achsdifferentialen eingesetzt werden.

Derartige Planetengetriebe weisen üblicher Weise mindestens ein Sonnenrad sowie mehrere mit dem Sonnenrad kämmende Planetenräder auf, welche über Bolzen in einem Planetenträger drehbar gelagert sind. Der Planetenträger kann wiederum ebenfalls drehfest mit einem Zahnrad gekoppelt sein. Bei bekannten Bauformen weisen Differentiale zwei gekoppelte Planetensätze auf, wobei beispielsweise ein Antriebsdrehmoment über eine Summenwelle eingeleitet, auf zwei Differenzwellen verteilt wird, wobei jede Differenzwelle mit einem Sonnenrad eines der Planetensätze gekoppelt ist. Derartige, auf Planetengetrieben basierende Differentiale zeichnen sich insbesondere durch die kompakte Bauform aus.

Die Druckschrift DE 10 2007 040 475 A1 betrifft ein Stirnraddifferential, insbesondere für Kraftfahrzeuge, mit einem Antriebselement, das drehfest mit einem Planetenträger verbunden ist, wobei in dem Planetenträger mindestens ein Paar miteinander kämmende Planetenräder drehbar angeordnet sind und wobei die Planetenräder mit je einem verzahnten Abtriebsrad kämmen. Die Abtriebsräder sind in den Figuren nahezu spiegelsymmetrisch zueinander relativ zu einer Radialebene ausgebildet.

Die Druckschrift US 5458547 offenbart eine Differenzialvorrichtung für ein Kraftfahrzeug, welches ein Antriebsdrehmoment von einem Motor, welcher an einer Achse eines Fahrzeugs angeordnet ist, auf zwei Ausgangswellen einer weiteren Achse des Fahrzeugs verteilt.

Die Druckschrift JP 2009 150 498 A betrifft ebenfalls eine Differenzialvorrichtung, welche sich dadurch auszeichnet, dass der Sperrwert zwischen den Differenzwellen über eine elektrische Kupplung einstellbar ist.

Die Druckschrift US 5,624,346 betrifft ein Differenzialgetriebe in Planetenbauweise, wobei die Sonnenräder des Differenzialgetriebes ineinander verschachtelt angeordnet sind. Aus der Figur 8 ergibt sich, dass auch bei dieser Druckschrift der Motor einer Achse und das Differenzialgetriebe einer anderen Achse zugeordnet ist.

Die JP 2002 235 832 A, die den nächstkommenden Stand der Technik bildet, zeigt eine Baugruppe mit einem Elektromotor und einem Getriebe, wobei die Hohlwelle des Elektromotors die Abtriebswelle des Getriebes umragt.

### Beschreibung

Der Erfindung liegt die Aufgabe zugrunde, eine Baugruppe mit einem Planetengetriebe sowie eine als die Baugruppe ausgebildete Antriebseinheit vorzuschlagen, welche sich durch eine sehr gute Integrationsfähigkeit auszeichnet.

Diese Aufgabe wird durch eine Baugruppe mit den Merkmalen des Anspruches 1 sowie durch eine Antriebseinheit mit den Merkmalen des Anspruches 7 gelöst. Bevorzugte oder vorteilhafte Ausführungsformen der Erfindung ergeben sich aus den Unteransprüchen, der nachfolgenden Beschreibung sowie den beigefügten Figuren.

Ein Gegenstand der Erfindung ist somit eine Baugruppe mit einem Planetengetriebe, welches zur Übertragung eines Antriebsdrehmomentes in einem Antriebsstrang eines Fahrzeugs geeignet und/oder ausgebildet ist, mit den Merkmalen des Anspruchs 1. Das Antriebsdrehmoment wird insbesondere von einem Motor zu Rädern des Fahrzeuges unter Zwischenschaltung des Planetengetriebes geführt. Insbesondere ist das Planetengetriebe als ein Differential, zum Beispiel als ein Achsdifferential oder Verteilungsdifferential, im Speziellen als ein Stirnraddifferential ausgebildet. Als Achsdifferential verteilt das Planetengetriebe das Antriebsdrehmoment auf zwei Achsen des Fahrzeugs, als Verteilungsdifferential verteilt das Planetengetriebe das Antriebsdrehmoment auf zwei Räder einer Achse des Fahrzeugs.

Das Planetengetriebe umfasst einen ersten und einen zweiten Sonnenradaufsatz, wobei jeder Sonnenradaufsatz mit einer Welle drehfest gekoppelt ist. Die Sonnenradaufsätze und/oder die Wellen sind relativ zueinander drehbar angeordnet. Insbesondere sind die Wellen als Differenzwellen in dem Planetengetriebe ausgebildet, welche das Antriebsdrehmoment z. B. von einer Summenwelle aus dem Planetengetriebe abführen. Die Sonnenradaufsätze umfassen bevorzugt einen Zahnradbereich, welcher insbesondere eine Stirnverzahnung aufweist.

Es wird vorgeschlagen, dass die Sonnenradaufsätze in einem Überlappbereich in radialer Richtung, insbesondere in Bezug auf mindestens eine vorzugsweise in Bezug auf beide Wellen, überlappend angeordnet sind. Betrachtet man somit einen Vektor, welcher von der durch die Welle(n) gebildete Drehachse radial absteht, so durchquert dieser Vektor zunächst den einen und dann den anderen Sonnenradaufsatz.

Diesem Vorschlag liegt die Überlegung zugrunde, dass durch den verschachtelten Aufbau der Sonnenradaufsätze zusätzliche Freiheitsgrade hinsichtlich der Positionierung der Zahnradbereiche der Sonnenradaufsätze gewonnen werden. So ist es insbesondere möglich, die Position der Zahnradbereiche der Sonnenradaufsätze bei der Konstruktion in axialer Richtung zu verschieben und so auf die Bedürfnisse einer Einbausituation anzupassen. Hierdurch wird die Integration des Planetengetriebes in eine Baugruppe vereinfacht. Eine erfindungsgemäße Baugruppe gemäß Anspruch 1 umfasst das Planetengetriebe und einen Elektromotor.

In der erfindungsgemäßen Umsetzung ist es vorgesehen, dass mindestens einer der Zahnradbereiche relativ zu seinem Aufsatzbereich in axialer Richtung übersteht. Beispielsweise ist der Sonnenradaufsatz in einem Längsschnitt durch die Drehachse der Wellen gekröpft ausgebildet. Mit dem in axialer Richtung verschobenen Zahnradbereich steht der Sonnenradaufsatz über den Aufsatzbereich des anderen Sonnenradaufsatzes über. Besonders bevorzugt ist, dass der überstehende Zahnradbereich den Aufsatzbereich des anderen Zahnradaufsatzes unter Ausbildung des Überlappbereiches und/oder des Stützbereichs übergreift. In dieser Ausführungsform ist es möglich, dass die Zahnradbereiche der beiden Sonnenradaufsätze in axialer Richtung sehr eng beieinander stehen, jedoch von der axialen Position her betrachtet nicht symmetrisch oder mittig angeordnet sind, sondern in Richtung des einen Sonnenradaufsatzes asymmetrisch verschoben sind. Damit ist es realisierbar, mit einem oder beiden der Zahnradbereiche Störkonturen bei der Integration des Planetengetriebes auszuweichen.

Bei einer bevorzugten Weiterbildung der Erfindung ist der Überlappbereich als ein Stützbereich ausgebildet, in dem sich die Sonnenradaufsätze über eine Radiallagerung oder über einen Reibbereich in radialer Richtung stützen. Somit stützt sich in radialer Richtung einer der Sonnenradaufsätze auf dem anderen ab. Diese Stütze in radialer Richtung hat eine führende Funktion für das Planetengetriebe, insbesondere in der Bauform als Differential. So ist es zum Beispiel denkbar, dass aufgrund von Belastungen auftretende Verschiebungen oder Verkippungen der Wellen durch die Kopplung der Sonnenradaufsätze kompensiert werden können. Hierdurch kann ein stabileres Betriebsverhalten des Planetengetriebes erreich werden.

Besonders bevorzugt stützen sich die Sonnenradaufsätze gegeneinander über eine Radiallagerung, welche beispielsweise als ein Gleitlager oder auch als ein beliebiges Wälzlager, insbesondere als ein Nadellager, ausgebildet sein kann. Bei anderen Ausführungsformen ist es möglich, dass sich die Sonnenradaufsätze gegenseitig über einen Reibbereich stützen, der gezielt eine erhöhte Reibung zwischen den Sonnenradaufsätzen und damit zwischen den Wellen hervorruft, um eine Relativdrehung der beiden Wellen zueinander zu bremsen.

Besonders bevorzugt weisen die Sonnenradaufsätze in dem Überlappbereich Laufflächen auf, welche zueinander koaxial und konzentrisch angeordnet sind. Insbesondere sind die Laufflächen in der Form von geraden Hohlzylindern ausgebildet. In einer ersten Ausführungsform bilden die Laufflächen selbst die Gleitlagerung und sind zum unmittelbaren und kontaktierenden aufeinander Ablaufen ausgebildet. Bei einer weiteren Ausführungsform ist ein Zwischenbauteil, wie zum Beispiel eine Gleiteinrichtung, insbesondere eine Gleithülse, oder eine Wälzkörpereinrichtung, insbesondere ein Käfig oder eine Hülse mit Wälzkörpern, im speziellen Nadeln, angeordnet. Während sich die Ausführungsform, bei der die Sonnenradaufsätze über die Laufflächen unmittelbar aufeinander ablaufen, durch eine verringerte Bauteilanzahl auszeichnet, weisen die Ausführungsformen, bei denen ein Zwischenbauteil eingebracht ist, Vorteile hinsichtlich der Montage oder der Lebensdauer auf.

Bei einer möglichen konstruktiven Ausführungsform der Erfindung weist jeder der Sonnenradaufsätze einen Aufsatzbereich zur drehfesten Anordnung oder Lagerung auf der zugeordneten Welle sowie den Zahnradbereich auf. Im speziellen sind der Aufsatzbereich und der Zahnradbereich einstückig ausgebildet.

Die drehfeste Anordnung kann beispielsweise durch einen Formschluss in Umlaufrichtung erreicht werden, wobei der Aufsatzbereich beispielsweise in axialer Richtung ausgerichtete und radial nach innen geöffnete Nuten aufweist, so dass der Aufsatzbereich zur drehfesten Anordnung auf die komplementär dazu ausgebildete, zugeordnete Welle aufgeschoben und in Umlaufrichtung formschlüssig gesichert ist.

Besonders vorteilhaft ist hierbei die optionale gegenseitige radiale Stütze, da dadurch sichergestellt ist, dass die Konstruktion mechanisch nicht instabil wird.

Mit dem Ziel, die mechanische Stabilität und/oder Steifigkeit weiter zu erhöhen, ist es bevorzugt, dass mindestens eine Axiallagerung vorgesehen ist, über die sich die Sonnenradaufsätze gegenseitig lagern. Beispielsweise ist ein Axialkranz zwischen den Sonnenradaufsätzen angeordnet, welcher auf beiden Sonnenradaufsätzen abwälzt. Alternativ oder ergänzend werden die Sonnenradaufsätze gegenüber einem gehäusefesten Anlauf, insbesondere dem Gehäuse selbst, oder einem Differentialkorb gelagert. Auch hier ist es denkbar, dass ein Axialkranz vorgesehen ist. Statt eines Axialkranzes ist es auch möglich, dass Gleitscheiben zwischen den Lagerpartnern positioniert sind.

In einer kombinierten Ausführungsform der Erfindung ist somit jeder Sonnenradaufsatz dreimal gelagert, und zwar ein erstes Mal in axialer Richtung gegenüber einem gehäusefesten Anlauf, insbesondere dem Gehäuse, oder dem Differentialkorb, zum zweiten ebenfalls in axialer Richtung gegen den anderen Sonnenradaufsatz und zum dritten in radialer Richtung relativ zu dem anderen Sonnenradaufsatz. Durch diese dreifache Lagerung des Sonnenradaufsatzes, der insbesondere als Abtriebssonne ausgebildet ist, wird eine sehr hohe mechanische Steifigkeit realisiert.

Besonders vorteilhaft kann das erfindungsgemäße Planetengetriebe eingesetzt werden, wenn dieses ergänzend zwei Planetenradsätze umfasst, wobei der erste Planetenradsatz mit dem einen Sonnenradaufsatz und der zweite Planetenradsatz mit dem anderen Sonnenradaufsatz kämmt und wobei die Planeten des ersten Planetenradsatzes mit den Planeten des zweiten Planetenradsatzes kämmen. In dieser Konstellation ist es aus konstruktiven Gründen vorteilhaft, die Zahnradabschnitte der Sonnenradaufsätze in axialer Richtung möglichst nahe beieinander zu positionieren, wobei durch die erfindungsgemäße Ausprägung diese nahe Anordnung besonders leicht erreichbar ist.

Ein weiterer Gegenstand der Erfindung betrifft eine Antriebseinheit für ein Fahrzeug, welche als die Baugruppe nach einem der vorhergehenden Ansprüche ausgebildet ist. Die Antriebseinheit weist mindestens den einen Elektromotor zur Bereitstellung des Antriebsdrehmoments auf. Das Planetengetriebe ist als ein Verteilungsgetriebe ausgebildet, wobei das Antriebsdrehmoment des Elektromotors über eine Summenwelle eingekoppelt wird und über die Sonnenradaufsätze und die Wellen als Differenzwellen abgegeben wird. Um eine besonders kompakte Bauweise zu erreichen, ist der Elektromotor koaxial zu den Wellen angeordnet ist. Erfindungsgemäß ist die Hauptwelle des Elektromotors koaxial zu mindestens einer der Wellen angeordnet. Erfindungsgemäß ist die Hauptwelle als eine Hohlwelle realisiert, die die mindestens eine Welle koaxial und/oder konzentrisch umschließt.

Bei einer möglichen Weiterbildung der Erfindung umfasst die Antriebseinheit ein Überlagerungsgetriebe, sowie einen weiteren Elektromotor, wobei das Überlagerungsgetriebe und/oder der weitere Elektromotor koaxial zu mindestens einer der Wellen angeordnet ist. Das Überlagerungsgetriebe ist dazu ausgebildet, ein Zusatzdrehmoment ergänzend zu dem Antriebsdrehmoment selektiv entweder auf die eine Welle oder auf die andere Welle oder auf beide Wellen aufzubringen. Insbesondere ist die Hauptwelle des weiteren Elektromotors koaxial zu mindestens einer der Wellen angeordnet. Im speziellen ist die Hauptwelle als eine Hohlwelle realisiert, die die mindestens eine Welle koaxial und/oder konzentrisch umschließt.

Damit ergibt sich ein möglicher Aufbau, welcher in axialer Richtung zunächst den ersten Elektromotor, dann das Verteilungsgetriebe ausgebildet als das Planetengetriebe, nachfolgend das Überlagerungsgetriebe und schließlich den weiteren Elektromotor zeigt, wobei alle genannten Komponenten koaxial zu den Wellen angeordnet sind, so dass sich insgesamt eine sehr kompakte Bauform ergibt.

Weitere Merkmale, Vorteile und Wirkungen der Erfindung ergeben sich aus der nachfolgenden Beschreibung eines bevorzugten Ausführungsbeispiels der Erfindung. Dabei zeigen:
- Figur 1: einen schematischen Längsschnitt durch eine Antriebseinheit als ein erstes Ausführungsbeispiel der Erfindung;
- Figur 2: in gleicher Darstellung wie Figur 1 eine Ausschnittvergrößerung im Bereich der Sonnenradaufsätze;
- Figur 3: eine Detaildarstellung der zwei Sonnenradaufsätze in den vorhergehenden Figuren;
- Figur 4: eine schematische dreidimensionale Darstellung der Sonnenräder mit den kämmenden Planeten.

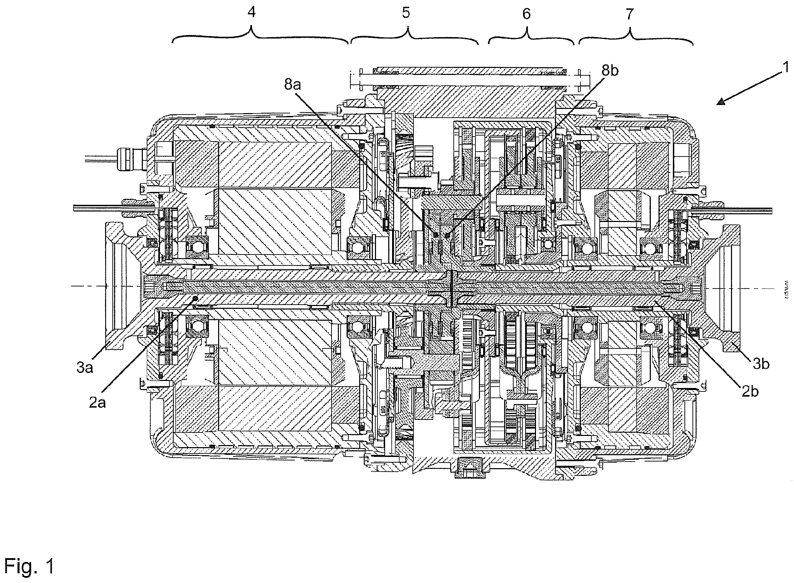

Die Figur 1 zeigt in einer schematischen Querschnittdarstellung eine Antriebseinheit 1, wie diese beispielsweise zum Antrieb eines Fahrzeuges eingesetzt werden kann. Die Antriebseinheit 1 weist als Abtriebe zwei Differenzwellen 2 a, b auf, welche endseitig mit Glocken 3 a, b ausgestattet sind, um gelenkig mit Wellen von Antriebsrädern eines Fahrzeuges gekoppelt zu werden. In ähnlicher Ausführungsform kann jedoch auch eine Antriebseinheit 1 realisiert sein, welche über die zwei Differenzwellen 2 a, b ein Antriebsdrehmoment für einen Vorderachsbereich und einen Hinterachsbereich bereitstellt.

Die Antriebseinheit 1 gliedert sich in axialer Richtung in einen ersten Elektromotor 4, welcher das Hauptantriebsdrehmoment für die Differenzwellen 2 a, b bereitstellt, ein Verteilungsgetriebe 5, welches das Hauptantriebsmoment des Elektromotors 4 auf die zwei Differenzwellen 2 a, b verteilt, ein Überlagerungsgetriebe 6 sowie einen zweiten Elektromotor 7, wobei das Überlagerungsgetriebe ausgebildet ist, das Antriebsdrehmoment des Elektromotors 7 dem Hauptdrehmoment zu überlagern und wahlweise auf beide Differenzwellen 2 a, b oder - beispielsweise für Kurvenfahrten des Fahrzeuges - auf eine der Differenzwellen 2 a oder 2 b zu übertragen. Elektromotor 4, Verteilungsgetriebe 5, Überlagerungsgetriebe 6, Elektromotor 7 sind jeweils koaxial und konzentrisch zu den Differenzwellen 2 a, b angeordnet, so dass sich insgesamt eine höchst kompakte Baueinheit darstellt, welche eine axiale Länge, zum Beispiel von kleiner als 65 cm und einen Durchmesser von kleiner als 35 cm aufweist.

Das Verteilungsgetriebe 5 ist als ein Planetengetriebe mit zwei gekoppelten Planetensätzen ausgebildet, wobei jeder Differenzwelle 2 a und 2 b jeweils ein Sonnenrad 8 a und 8 b zugeordnet ist.

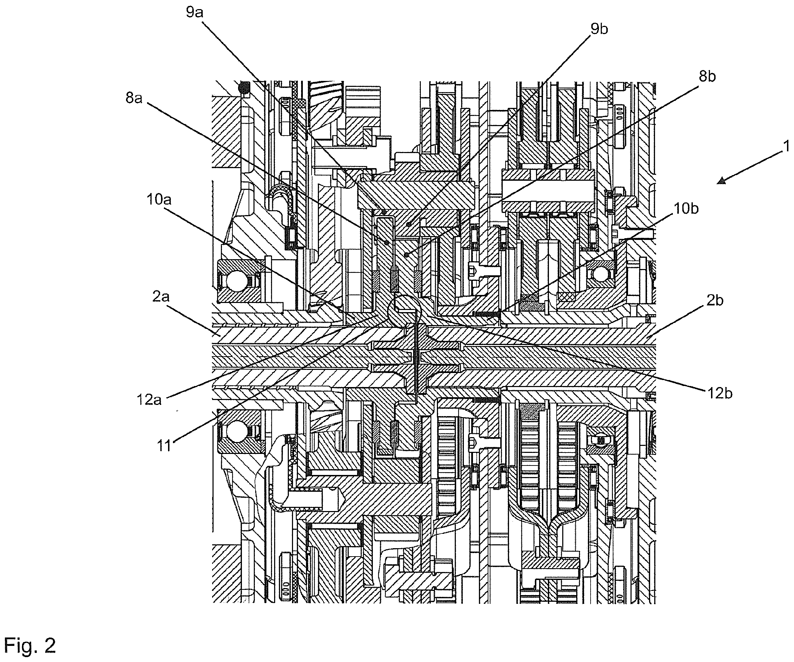

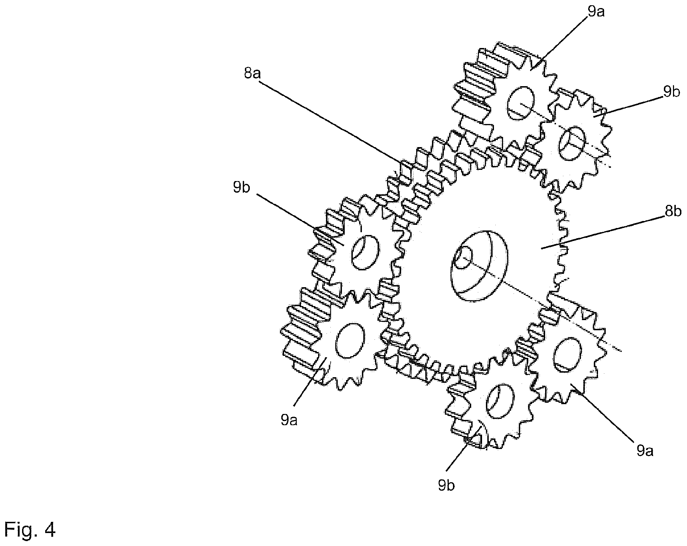

In der Figur 2 ist eine Detailvergrößerung der Antriebseinheit 1 im Bereich der Sonnenräder 8 a und b dargestellt. Aus dieser Darstellung ergibt sich, dass die Sonnenräder 8 a, b einen unterschiedlichen Durchmesser aufweisen und jeweils mit einem ihnen zugeordneten Planetensatz 9 a, b kämmen. Zur Anordnung der Planetensätze 9 a, b wird auf die schematische dreidimensionale Darstellung in der Figur 4 verwiesen.

Die Figur 4 zeigt in einer schematischen dreidimensionalen Darstellung nur die Zuordnung der Sonnenräder 8 a, b relativ zu den zwei Planetensätzen 9 a, b als eine Funktionsdarstellung. Hierbei ist zu erkennen, dass jeweils ein Sonnenrad 8 a bzw. 8 b mit einem zugeordneten Planetensatz 9 a bzw. 9 b kämmt. Zudem kämmen die Planeten der Planetensätze 9 a, b miteinander. Diese sehr spezifische Anordnung ist in einfacher Weise erreichbar, wenn die Sonnenräder 8 a, b in axialer Richtung sehr eng beieinander stehen.

Um einen möglichst geringen Abstand der Sonnenräder 8 a, b zu erreichen, sind die Sonnenräder 8 a, b jeweils auf einem Aufsatzbereich 10 a bzw. 10 b aufgesetzt, wie dies z.B. aus der Figur 2 zu erkennen ist, so dass sich ein Sonnenradaufsatz 12 a und ein Sonnenradaufsatz 12b ausbildet. Während das Sonnenrad 8 a in axialer Richtung betrachtet mittig oder symmetrisch auf dem Aufsatzbereich 10a aufgesetzt ist, ist das Sonnenrad 8 b relativ zu seinem Aufsatzbereich 10 b in axialer Richtung verschoben, so dass dieses in dem gezeigten Längsschnitt in einer gekröpften Verlängerung des Aufsatzbereiches 10 b angeordnet ist. Sonnenrad 8 a und Aufsatzbereich 10 a bzw. Sonnenrad 8 b und Aufsatzbereich 10 b sind miteinander einstückig ausgeführt. Durch den axialen Versatz des Sonnenrades 8 b relativ zu seinem Aufsatzbereich 10 b ist das Zahnrad 8 b in radialer Richtung zu der Drehachse der Differenzwellen 2 a, b in einem Überlappbereich 11 überlappend zu dem Aufsatzbereich 10 a des Sonnenrades 8 a angeordnet. Besonders hervorzuheben ist zudem, dass in Bezug auf die Trennebene zwischen den Differenzwellen 2 a, b die beiden Sonnenräder 8 a, b in axialer Richtung deutlich asymmetrisch, nämlich versetzt nach links angeordnet sind. So befinden sich die Sonnenräder 8 a, b nahezu vollständig in dem axialen Bereich der Differenzwelle 2 a. Durch die gekröpfte oder napfartige Ausführung des aus Sonnenrad 8 b und Aufsatzbereich 10 b gebildeten Sonnenradaufsatzes 12 b wird eine sehr enge axiale Position zwischen Sonnenrad 8a und Sonnenrad 8 b erreicht, so dass das Kämmen der zwei Planetenradsätze 9 a, b einfach umsetzbar ist.

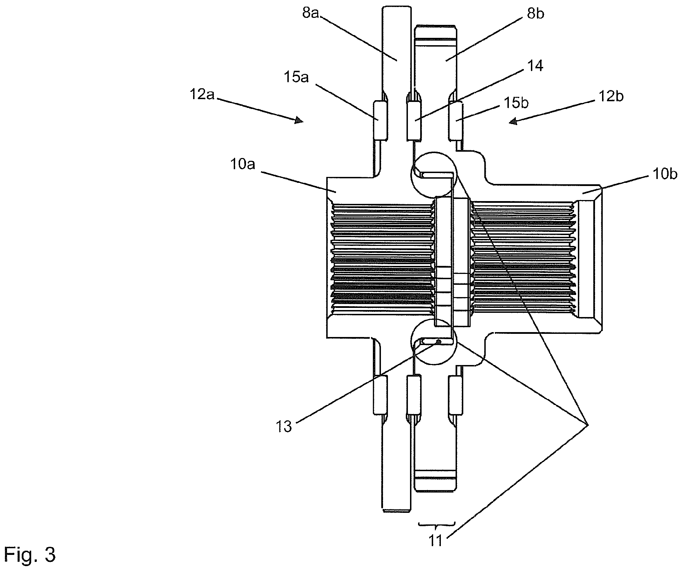

Die Figur 3 zeigt in einer schematischen Detailvergrößerung die Sonnenradaufsätze 12 a, b aus den vorhergehenden Figuren. In dieser Darstellung ist zu erkennen, dass jeder der Sonnenradaufsätze 12 a, b den Aufsatzbereich 10 a bzw. 10 b umfasst, welcher eine rohrförmige Aufnahme für die Differenzwelle 2 a bzw. 2 b bildet und welcher in axialer Richtung verlaufende Nuten zur in Umlaufrichtung formschlüssigen Lagerung des Sonnenradaufsatzes 12 a bzw. 12 b auf der Differenzwelle 2 a bzw. 2 b aufweist. Einstückig an den Aufsatzbereichen 10 a, b sind die Sonnenräder 8 a, b angeformt, welche jeweils eine Stirnradverzahnung aufweisen. Das Sonnenrad 8 b ist in axialer Richtung relativ zu seinem Aufsatzbereich 10 b versetzt, so dass dieses in radialer Richtung in dem Überlappbereich 11 überlappend zu dem Aufsatzbereich 10 a des Sonnenradaufsatzes 12 a angeordnet ist.

Es ist optional möglich, in dem Überlappbereich 11 eine Radiallagerung 13 anzuordnen, welche beispielsweise als eine Gleithülse oder auch als ein Wälzlager, insbesondere als ein Nadellager ausgebildet sein kann, so dass die beiden Sonnenradaufsätze 12 a, b sich gegenseitig in radialer Richtung abstützen können. Statt einer Radiallagerung kann jedoch auch ein Reibbereich angeordnet sein, um zwar eine relative Verdrehung der Sonnenradaufsätze 12 a, b zu erlauben, diese jedoch durch Reibung zu bremsen. Neben dieser radialen Lagerung der Sonnenradaufsätze 12 a, b zueinander sind diese zudem in axialer Richtung über eine optionale Axiallagerung 14 gegeneinander gelagert, welche beispielsweise als eine Gleitscheibe oder als ein Wälzkörperkranz ausgebildet sein kann. Sowohl bei der Radiallagerung 13 als auch bei der Axiallagerung 14 sind die Laufbahnen der Lagerungen jeweils durch die Oberflächen der Sonnenradaufsätze 12 a, b gebildet.

Um die Steifigkeit und die mechanische Stabilität der Sonnenradaufsätze 12 a, b im Betrieb weiter zu erhöhen, kann optional vorgesehen sein, dass jedes der Sonnenradaufsätze 12 a bzw. 12 b durch eine weitere Axiallagerung 15 a bzw. 15 b gegenüber einer Anlaufscheibe oder einem Differentialkorb in axialer Richtung gelagert ist. Damit ist jeder der Sonnenradaufsätze 12 a, b dreifach gelagert und zwar für den Sonnenradaufsatz 12 a über die Axiallagerung 15 a, die Axiallagerung 14 und die Radiallagerung 13 bzw. für den Sonnenradaufsatz 12 b über die Axiallagerung 15 b, die Axiallagerung 14 und die Radiallagerung 13.

Besondere Vorteile der Erfindung sind in der Freiheit bei der Gestaltung von Sonnenradaufsätzen 12 a,b für Differenzwellen 2a,b bei eingeschränktem Bauraum zu sehen. Insbesondere durch die Radiallagerung 13 wird eine verbesserte Lagerfunktion der Sonnenradaufsätze 12 a, b unter Extremlast erreicht.

### Bezugszeichenliste

- 1: Antriebseinheit
- 2 a, b: Differenzwellen
- 3 a, b: Glocken
- 4: Elektromotor
- 5: Verteilungsgetriebe
- 6: Überlagerungsgetriebe
- 7: Elektromotor
- 8 a, b: Sonnenrad
- 9 a, b: Planetenradsätze
- 10 a, b: Aufsatzbereich
- 11: Überlappbereich
- 12 a, b: Sonnenradaufsätze
- 13: Radiallagerung
- 14: Axiallagerung
- 15 a, b: Axiallagerung

## Patentansprüche

1. Baugruppe mit einem Planetengetriebe (5) zur Übertragung eines Antriebsdrehmoments in einem Fahrzeug mit einem ersten Sonnenradaufsatz (12a) und mit einem zweiten Sonnenradaufsatz (12b) und mit zwei Wellen (2a,b), wobei jeder der Sonnenradaufsätze (12a,b) mit einer der Wellen (2a,b) drehfest gekoppelt ist und die Sonnenradaufsätze (12a,b) relativ zueinander drehbar sind, wobei die Baugruppe einen Elektromotor (4) zur Bereitstellung des Antriebsdrehmoments aufweist, wobei das Planetengetriebe (5) als ein Verteilungsgetriebe ausgebildet ist, wobei das Antriebsdrehmoment des Elektromotors (4) über eine Summenwelle eingekoppelt wird und über die Sonnenradaufsätze (12a,b) und die Wellen als Differenzwellen (2a,b) abgegeben wird, wobei eine Hauptwelle des Elektromotors (4) als eine Hohlwelle realisiert ist, die eine der Wellen (2a) koaxial und/oder konzentrisch umschließt,
**dadurch gekennzeichnet, dass** jeder der Sonnenradaufsätze (12a,b) einen Aufsatzbereich (10a,b) zur drehfesten Anordnung auf der zugeordneten Welle (2a,b) und einen Zahnradbereich (8a,b) aufweist, wobei mindestens einer der Zahnradbereiche (8a,b) relativ zu seinem Aufsatzbereich (10a,b) in axialer Richtung übersteht, sodass die Sonnenradaufsätze (12a,b) in einem Überlappbereich (11) in radialer Richtung überlappend angeordnet sind.

2. Baugruppe nach Anspruch 1, **dadurch gekennzeichnet, dass** der Überlappbereich (11) als ein Stützbereich ausgebildet ist, in dem sich die Sonnenradaufsätze (12a,b) über eine Radiallagerung (13) oder über einen Reibbereich in radialer Richtung stützen.

3. Baugruppe nach Anspruch 1 oder 2, **dadurch gekennzeichnet, dass** die Sonnenradaufsätze (12a,b) in dem Überlappbereich (11) Laufflächen aufweisen, welche wahlweise als Gleitlagerung unmittelbar aufeinander ablaufen oder über ein Zwischenbauteil, wie z.B. eine Gleiteinrichtung oder eine Wälzkörpereinrichtung, aufeinander ablaufen.

4. Baugruppe nach Anspruch 3, **dadurch gekennzeichnet, dass** der überstehende Zahnradbereich (8b) den Aufsatzbereich (10a) des anderen Zahnradaufsatzes (12a) unter Ausbildung des Überlappbereichs (11) übergreift.

5. Baugruppe nach einem der vorhergehenden Ansprüche, **dadurch gekennzeichnet, dass** das Planetengetriebe (5) mindestens eine Axiallagerung (14, 15a,b) aufweist, über die sich die Sonnenradaufsätze (12a,b) gegenseitig lagern und/oder über die sich einer der Sonnenradaufsätze (12a,b) gegenüber einem gehäusefesten Anlauf oder einem Differentialkorb lagert.

6. Baugruppe nach einem der vorhergehenden Ansprüche, **dadurch gekennzeichnet, dass** das Planetengetriebe (5) zwei Planetenradsätze (9a,b) aufweist, wobei der erste Planetenradsatz (9a) mit dem einen Sonnenradaufsatz (12a) und der der zweite Planetenradsatz (9b) mit dem anderen Sonnenradsatz (12b) kämmt und wobei die Planeten des ersten Planetenradsatzes (9a) mit den Planeten des zweiten Planetenradsatzes (9b) kämmen.

7. Antriebseinheit (1) für ein Fahrzeug, **gekennzeichnet durch** ausgebildet als die Baugruppe nach einem der vorhergehenden Ansprüche.

8. Antriebseinheit (1) nach Anspruch 7, **dadurch gekennzeichnet, dass** der Elektromotor (4) und/oder die Hauptwelle des Elektromotors (4) koaxial zu den Wellen (2a,b) angeordnet ist.

9. Antriebseinheit (1) nach Anspruch 7 oder 8, **gekennzeichnet durch** ein Überlagerungsgetriebe (6) sowie einen weiteren Elektromotor (7), wobei das Überlagerungsgetriebe (6) und/oder der weitere Elektromotor (7) koaxial zu den Wellen (2a,b) angeordnet ist.

## Claims

1. Subassembly having a planetary gear mechanism (5) for transmitting a drive torque in a vehicle, having a first sun-wheel attachment (12a) and having a second sun-wheel attachment (12b) and having two shafts (2a, b), wherein each of the sun-wheel attachments (12a, b) is coupled to one of the shafts (2a, b) in a rotationally fixed manner and the sun-wheel attachments (12a, b) can be rotated relative to one another, wherein the subassembly has an electric motor (4) for supplying the drive torque, wherein the planetary gear mechanism (5) is designed in the form of a distribution gear mechanism, wherein the drive torque of the electric motor (4) is introduced via a sum shaft and is dissipated via the sun-wheel attachments (12a, b) and the shafts, forming differential shafts (2a, b), and wherein a main shaft of the electric motor (4) is realized in the form of a hollow shaft which encloses one of the shafts (2a) coaxially and/or concentrically, **characterized in that** each of the sun-wheel attachments (12a, b) has an attachment region (10a, b) for rotationally fixed arrangement on the associated shaft (2a, b) and also has a gearwheel region (8a, b), wherein at least one of the gearwheel regions (8a, b) projects in the axial direction relative to its attachment region (10a, b), and therefore the sun-wheel attachments (12a, b) are arranged to overlap in the radial direction in an overlap region (11).

2. Subassembly according to Claim 1, **characterized in that** the overlap region (11) is designed in the form of a supporting region in which the sun-wheel attachments (12a, b) are supported in the radial direction via a radial bearing means (13) or a friction region.

3. Subassembly according to Claim 1 or 2, **characterized in that**, in the overlap region (11), the sun-wheel attachments (12a, b) have running surfaces which optionally run directly one upon the other in the form of a sliding bearing means or run one upon the other via an intermediate component, e.g. a sliding device or a roller-body device.

4. Subassembly according to Claim 3, **characterized in that** the projecting gearwheel region (8b) engages over the attachment region (10a) of the other gearwheel attachment (12a) to form the overlap region (11).

5. Subassembly according to one of the preceding claims, **characterized in that** the planetary gear mechanism (5) has at least one axial bearing means (14, 15a, b), via which the sun-wheel attachments (12a, b) are mounted in relation to one another and/or via which one of the sun-wheel attachments (12a, b) is mounted in relation to a housing-mounted stop or a differential cage.

6. Subassembly according to one of the preceding claims, **characterized in that** the planetary gear mechanism (5) has two planet-wheel sets (9a, b), wherein the first planet-wheel set (9a) meshes with the one sun-wheel attachment (12a) and the second planet-wheel set (9b) meshes with the other sun-wheel set (12b), and wherein the planets of the first planet-wheel set (9a) mesh with the planets of the second planet-wheel set (9b) .

7. Drive unit (1) for a vehicle, **characterized by** designed in the form of the subassembly according to one of the preceding claims.

8. Drive unit (1) according to Claim 7, **characterized in that** the electric motor (4) and/or the main shaft of the electric motor (4) are/is arranged coaxially in relation to the shafts (2a, b).

9. Drive unit (1) according to Claim 7 or 8, **characterized by** a superposition gear mechanism (6) and a further electric motor (7), wherein the superposition gear mechanism (6) and/or the further electric motor (7) are/is arranged coaxially in relation to the shafts (2a, b).

## Revendications

1. Module doté d'un engrenage planétaire (5) pour transmettre un couple d'entraînement dans un véhicule avec un premier jeu de roues solaires (12a) et avec un deuxième jeu de roues solaires (12b) et avec deux arbres (2a, b), chacun des jeux de roues solaires (12a, b) étant couplé solidairement en rotation à un des arbres (2a, b) et les jeux de roues solaires (12a, b) pouvant pivoter l'un par rapport à l'autre, le module comportant un moteur électrique (4) servant à la mise à disposition du couple d'entraînement, l'engrenage planétaire (5) étant réalisé sous la forme d'un engrenage de répartition, le couple d'entraînement du moteur électrique (4) étant couplé via un arbre cumulatif et étant dégagé via les jeux de roues solaires (12a, b) et les arbres prenant la forme d'arbres différentiels (2a, b), un arbre principal du moteur électrique (4) étant réalisé sous la forme d'un arbre creux entourant coaxialement et/ou concentriquement un des arbres (2a) ;
**caractérisé en ce que** :
chacun des jeux de roues solaires (12a, b) comporte une zone de rehaussement (10a, b) pour l'agencement solidaire en rotation sur l'arbre (2a, b) associé et une zone de roue dentée (8a, b), au moins une des zones de roue dentée (8a, b) saillant dans la direction axiale par rapport à sa zone de rehaussement (10a, b), de sorte que les jeux de roues solaires (12a, b) soient disposés de façon à se chevaucher dans la direction radiale dans une zone de chevauchement (11).

2. Module selon la revendication 1, **caractérisé en ce que** la zone de chevauchement (11) est réalisée sous la forme d'une zone de maintien dans laquelle les jeux de roues solaires (12a, b) sont maintenus dans la direction radiale par le biais d'un palier radial (13) ou d'une zone de frottement.

3. Module selon la revendication 1 ou 2, **caractérisé en ce que** les jeux de roues solaires (12a, b) comportent dans la zone de chevauchement (11) des surfaces de roulement passant directement les unes sur les autres au choix sous la forme d'un palier de glissement ou par le biais d'un composant intermédiaire, par exemple un dispositif de glissement ou un dispositif de corps de rouleau.

4. Module selon la revendication 3, **caractérisé en ce que** la zone de roue dentée (8b) saillante saisit la zone de rehaussement (10a) de l'autre jeu de roues dentées (12a) en formant la zone de chevauchement (11).

5. Module selon l'une quelconque des revendications précédentes, **caractérisé en ce que** l'engrenage planétaire (5) comporte au moins un palier axial (14, 15a, b) via lequel les jeux de roues solaires (12a, b) reposent de façon mutuelle et/ou via lequel un des jeux de roues solaires (12a, b) repose par rapport à une piste fixe par rapport au boîtier ou à une cage de différentiel.

6. Module selon l'une quelconque des revendications précédentes, **caractérisé en ce que** l'engrenage planétaire (5) comporte deux essieux planétaires (9a, b), le premier essieu planétaire (9a) s'engrenant avec le premier jeu de roues solaires (12a) et le deuxième essieu planétaire (9b) s'engrenant avec l'autre essieu solaire (12b) et les planètes du premier essieu planétaire (9a) s'engrenant avec les planètes du deuxième essieu planétaire (9b).

7. Unité d'entraînement (1) pour un véhicule, **caractérisé par** réalisé sous la forme du module selon l'une quelconque des revendications précédentes.

8. Unité d'entraînement (1) selon la revendication 7, **caractérisée en ce que** le moteur électrique (4) et/ou l'arbre principal du moteur électrique (4) est disposé dans le plan coaxial par rapport aux arbres (2a, b).

9. Unité d'entraînement (1) selon la revendication 7 ou 8, **caractérisée par** la présence d'un engrenage superposé (6) ainsi que d'un moteur électrique (7) supplémentaire, l'engrenage superposé (6) et/ou le moteur électrique (7) supplémentaire étant disposé dans le plan coaxial par rapport aux arbres (2a, b).
